# EUROPÄISCHE PATENTSCHRIFT

(11) **EP 3 022 001 B1**
(45) Veröffentlichungstag und Bekanntmachung des Hinweises auf die Patenterteilung: **01.05.2019**
(21) Anmeldenummer: 14762090.0
(22) Anmeldetag: 11.07.2014
(51) Int. Cl.: B23F 19/05, B23F 23/12, B24B 53/075

(54) **VERFAHREN UND VORRICHTUNG ZUM FEINBEARBEITEN EINES VERZAHNTEN WERKSTÜCKS UND PROGRAMM ZU DEREN STEUERUNG**
METHOD AND DEVICE FOR FINE MACHINING A TOOTHED WORKPIECE, AND PROGRAM FOR CONTROLLING SAID DEVICE
PROCÉDÉ ET DISPOSITIF POUR L'USINAGE DE FINITION D'UNE PIÈCE DENTÉE ET PROGRAMME DE COMMANDE ASSOCIÉ

(30) Priorität: 17.07.2013 DE 102013011941
(43) Veröffentlichungstag der Anmeldung: 25.05.2016
(73) Patentinhaber: The Gleason Works, Rochester, NY 14692-2970 (US)
(72) Erfinder: REICHERT, Gerhard, 82216 Maisach-Gernlinden (DE); FUNKE, Walter, 80927 München (DE); SCHAUER, Engelbert, 85716 Unterschleissheim (DE)
(74) Vertreter: Leinweber & Zimmermann
(86) Internationale Anmeldenummer: PCT/IB2014/001313
(87) Internationale Veröffentlichungsnummer: WO 2015/008128

(56) Entgegenhaltungen:
- DE-A1- 4 214 851
- DE-A1- 19 500 801
- DE-A1-102010 024 366
- DE-C1- 4 323 935

## Beschreibung

Die Erfindung bezieht sich auf ein Verfahren zum Feinbearbeiten eines verzahnten Werkstücks mit einem damit in gegenseitigem Zahneingriff kämmenden verzahnten Feinbearbeitungswerkzeug, das einem Abrichtvorgang unterzogen wird, bei dem das Feinbearbeitungswerkzeug und ein verzahntes Abrichtwerkzeug in gegenseitigem Zahneingriff um ihre unter einem von Null verschiedenen Achsabstand und einem von Null verschiedenen Achskreuzungswinkel angeordneten Verzahnungsachsen rotieren, sowie auf eine zur Durchführung des Verfahrens geeignete Vorrichtung und ein entsprechendes Steuerungsprogramm.

Ein derartiges Verfahren ist das in der Praxis bekannte Verzahnungshonen mit abrichtbarem Honring. Letzterer bildet das Feinbearbeitungswerkzeug für das zu bearbeitende verzahnte Werkstück. Das Abrichtwerkzeug für den Honring bildet ein außenverzahntes Diamantabrichtzahnrad, das beim Abrichtvorgang mit der Innenverzahnung des Honrings kämmend in Eingriff steht. Dabei sind in dieser Zahnradpaarung die unter einem von Null verschiedenen Achskreuzungswinkel angeordneten Verzahnungsachsen des Feinbearbeitungswerkzeugs und des Abrichtwerkzeugs relativ zueinander derart angeordnet, daß ihr Achsabstand maximal ist und ihre gegenseitige Zustellung für den Abrichtvorgang in der Richtung des Achsabstandes erfolgt.

In dieser Relativposition der Verzahnungsachsen wird beim Abrichtvorgang die Geometrie des Abrichtwerkzeugs auf das Feinbearbeitungswerkzeug abgebildet. Wenn anschließend in derselben Relativposition mit dem Feinbearbeitungswerkzeug ein Werkstück zu dessen Bearbeitung kämmend in Eingriff gebracht wird, wird auf letzteres dieselbe Flankengeometrie abgebildet. Für den Einsatz der Werkstücke in Getrieben sind jedoch oftmals Flankenmodifikationen ihrer Verzahnungen erforderlich. Insbesondere werden wegen Wellenverbiegungen unter Last konische Flankenmodifikationen benötigt. Derartige Flankenmodifikationen können einerseits durch die Verwendung eines entsprechend modifizierten Abrichtwerkzeugs erzielt werden. Dies erfordert jedoch einen hohen Fertigungsaufwand bei der Herstellung der Abrichtwerkzeuge. Ferner muß für jede Flankenmodifikation ein gesondertes Abrichtwerkzeug zur Verfügung gestellt werden. Andererseits können die Flankenmodifikationen durch entsprechende relative Verstellungen und zusätzliche Bewegungen der Verzahnungsachsen bei der Bearbeitung des Werkstücks herbeigeführt werden. Dies bedingt einen entsprechend hohen Aufwand bei der Steuerung der Verzahnungsachsen. Ferner ist bei der Bearbeitung von Werkstücken, an deren Verzahnungen sich Schultern im Sinne einer Störkontur anschließen, der Bewegungsspielraum für die zum Längshonen erforderliche Hubbewegung in der Richtung der Werkstückverzahnungsachse eingeschränkt. Begnügt man sich dagegen mit reinem Tauchhonen, bei dem eine derartige Hubbewegung nicht stattfindet, sondern nur eine radiale Zustellung erfolgt, dann ergibt sich eine erhöhte Oberflächenrauhigkeit.

DE 195 00 801 A1 offenbart ein Abrichten eines Honrings mit einem im Vergleich zu den damit gehonten Werkrädern unterschiedlichen Durchmesser des Abrichtrads, der zum Erreichen der richtigen Eingriffsverhältnisse durch einen entsprechend unterschiedlichen Achsabstand kompensiert wird. Abrichten und Honen erfolgt jeweils in der Position des maximalen Achsabstands.

Der Erfindung liegt die Aufgabe zugrunde, ein Verfahren der eingangs genannten Art zu schaffen, das mit geringerem Aufwand zu Werkstücken mit konisch modifizierten Flanken guter Oberflächenqualität führt, sowie eine gemäß diesem Verfahren gesteuerte Vorrichtung und ein entsprechendes Steuerungsprogramm zur Verfügung zu stellen.

Diese Aufgabe wird hinsichtlich des Verfahrens erfindungsgemäß dadurch gelöst, daß die Verzahnungsachsen des Feinbearbeitungswerkzeugs und des Abrichtwerkzeugs relativ zueinander in einer gegenüber einer Position maximalen Achsabstandes versetzten Position verringerten Achsabstandes angeordnet werden.

Die Durchführung des Abrichtvorgangs mit der erfindungsgemäß vorgesehenen Versetzung des Abrichtwerkzeugs bewirkt eine entsprechende Modifikation der Verzahnung des Feinbearbeitungswerkzeugs. In dem bevorzugten Fall, daß die Verzahnungen des Abrichtwerkzeugs und des unabgerichteten Feinbearbeitungswerkzeugs abweichungsfrei zylindrisch sind, führt die erfindungsgemäße Abrichtposition zu einer konischen Flankenmodifikation der Verzahnung des Feinbearbeitungswerkzeugs. Während also die Zahndicke der Verzahnung des Abrichtwerkzeuges über die Zahnbreite konstant ist (ohne Berücksichtigung von Flankenlinienballigkeiten), ändert sich die Profilverschiebung der Verzahnung des abgerichteten Feinbearbeitungswerkzeugs über die Zahnbreite. Dabei erfolgt die Zustellung des Abrichtwerkzeugs am besten in radialer Richtung des Feinbearbeitungswerkzeugs; doch ist es auch möglich, die Zustellung z. B. nur in einer zum Achsabstand orthogonalen Richtung zu bewirken.

Bei Verwendung eines abweichungsfrei zylindrisch verzahnten Abrichtwerkzeugs ist es insbesondere vorteilhaft, dem Abrichtwerkzeug beim Abrichtvorgang eine zu dessen Verzahnungsachse parallele Bewegungskomponente zu überlagern. Eine solche Überlagerung, wie sie insbesondere als Längshub des Werkstücks beim Längshonen bekannt ist, verbessert beim Abrichten die Oberflächenqualität des Feinbearbeitungswerkzeugs derart, daß auch bei der nachfolgenden längshubfreien oder extrem längshubreduzierten Bearbeitung von Werkstücken deren bearbeitete Oberflächen eine deutlich bessere Oberflächenrauhigkeit aufweisen.

In einer vorteilhaften Ausführungsform wird der Relativbewegung zwischen dem Feinbearbeitungswerkzeug und dem damit kämmenden Abrichtwerkzeug eine zu dessen Verzahnungsachse orthogonale Bewegungskomponente überlagert. Dies kann insbesondere derart geschehen, daß das Abrichtwerkzeug trotz seiner gegenüber der Position maximalen Abstandes versetzten Position mit dem Feinbearbeitungswerkzeug beim Abrichten in Linienkontakt gehalten wird.

Die Werkstückbearbeitung mit dem abgerichteten Feinbearbeitungswerkzeug erfolgt in für die Praxis besonders wichtigen Ausführungsformen derart, daß das Werkstück mit dem abgerichteten Feinbearbeitungswerkzeug im wesentlichen in einer Position maximalen Achsabstandes zwischen der Verzahnungsachse des Feinbearbeitungswerkzeuges und der Verzahnungsachse des Werkstücks bearbeitet wird, d. h., daß in dieser Position der Achsabstand genau maximal ist oder vom Maximum nur so weit abweicht, als es zur Erzeugung üblicher Flankenmodifikationen der Verzahnung des Werkstücks erforderlich ist. Hierdurch wird die beim Abrichten infolge der versetzten Position des Abrichtwerkzeuges erhaltene konisch modifizierte Verzahnungsgeometrie des Feinbearbeitungswerkzeuges auf das Werkstück abgebildet.

Dieser Abbildungsvorgang kann derart ausgeführt werden, daß bei der Bearbeitung des Werkstücks der Achskreuzungswinkel zwischen den Verzahnungsachsen des Werkstücks und des Feinbearbeitungswerkzeugs auf einen dem Achskreuzungswinkel zwischen den Verzahnungsachsen des Abrichtwerkzeugs und des Feinbearbeitungswerkzeugs beim Abrichtvorgang entsprechenden Wert eingestellt wird. In diesem Fall ist die Konizität der Rechts- und Linksflanken der Werkstücksverzahnung ebenso symmetrisch wie die der Abrichtradverzahnung. Andererseits kann aber auch derart vorgegangen werden, daß bei der Bearbeitung des Werkstücks der Achskreuzungswinkel zwischen den Verzahnungsachsen des Werkstücks und des Feinbearbeitungswerkzeugs auf einen gegenüber dem Achskreuzungswinkel zwischen den Verzahnungsachsen des Abrichtwerkzeugs und des Feinbearbeitungswerkzeugs beim Abrichtvorgang versetzten Wert eingestellt wird. Dadurch ergibt sich eine Unsymmetrie in der Konizität der Rechts- und Linksflanken der Werkstücksverzahnung.

In vorrichtungsmäßiger Hinsicht wird die der Erfindung zugrundeliegende Aufgabe gelöst durch eine Vorrichtung zum Feinbearbeiten eines verzahnten Werkstücks, mit einem um seine Verzahnungsachse drehbaren verzahnten Feinbearbeitungswerkzeug, einem um seine Verzahnungsachse drehbaren verzahnten Abrichtwerkzeug, einer zur Einstellung der Relativposition der beiden Verzahnungsachsen dienenden Einrichtung und einer zur Steuerung der Einstelleinrichtung dienenden Steuereinrichtung, die sich dadurch auszeichnet, daß die Steuereinrichtung die Vorrichtung derart steuert, dass ein Verfahren nach einem der Ansprüche 1 bis 12 ausgeführt wird.

Diese Vorrichtung kann die übliche Achsgeometrie bekannter Hohnmaschinen aufweisen. In diesen ist eine Werkstückspindel zur abwechslungsweisen drehbaren Lagerung des Abrichtwerkzeugs und des zu bearbeitenden Werkstücks um ihre jeweilige Verzahnungsachse vorgesehen und eine Lagereinrichtung zur drehbaren Abstützung des das Feinbearbeitungswerkzeug bildenden Hohnrings um seine Verzahnungsachse. Für die Drehung um diese Verzahnungsachsen kann für jede dieser Achsen ein eigener Antrieb vorgesehen sein. Alternativ weist nur eine dieser Achsen einen Antrieb auf, wobei die Drehung um die andere Achse durch Mitnahme infolge des kämmenden Bearbeitungseingriffs zwischen dem Feinbearbeitungswerkzeug und dem Abrichtwerkzeug bzw. dem Werkstück erfolgt. Weiter ist eine Schwenkeinrichtung vorgesehen, mit der der Achskreuzungswinkel zwischen den Drehachsen der Werkstückspindel und des Feinbearbeitungswerkzeugs einstellbar ist. Außerdem ist eine Linearachse zur Einstellung des Achsabstands zwischen diesen beiden Drehachsen vorhanden. Schließlich ist die Relativlage der beiden Achsen in der zum Achsabstand transversalen Ebene einstellbar. Durch ein derartiges System von Achsen lassen sich die zur Durchführung des Verfahrens nach einem der Ansprüche 1 bis 10 erforderlichen Relativlagen zwischen dem Feinbearbeitungswerkzeug und dem Abrichtwerkzeug bzw. dem zu bearbeitenden Werkstück einstellen.

Vorzugsweise ist die Steuereinrichtung, mit der diese Einstellungen ausführbar sind, programmgesteuert. Dadurch ist die Vorrichtung durch Laden eines entsprechenden Steuerungsprogramms für die Durchführung einer jeweils gewünschten Verfahrensvariante programmierbar.

Weitere Merkmale, Einzelheiten und Vorteile der Erfindung ergeben sich aus der folgenden Beschreibung, in der die Erfindung beispielhaft anhand der Zeichnung näher erläutert ist. Hierin zeigen:
- Fig. 1: eine Achsengeometrie einer bekannten Zahnradhonmaschine,
- Fig. 2a und 2b: eine schematische Darstellung einer Relativposition zwischen einem Honring und einem Abrichtwerkzeug beim Abrichten bzw. einem Werkstück beim Bearbeiten, und
- Fig. 3: eine schematische Darstellung verschiedener Relativpositionen eines Honrings und eines Abrichtwerkzeugs.

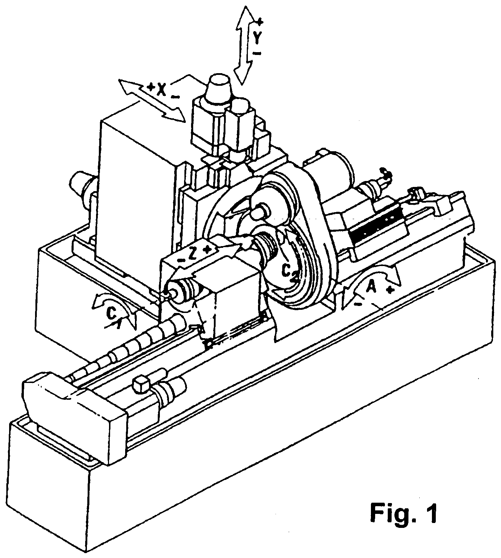

In Fig. 1 bezeichnet C₁ die Drehachse einer Werkstückspindel, auf die ein außenverzahntes Werkstück oder ein außenverzahntes Abrichtwerkzeug derart aufspannbar ist, daß deren jeweilige Verzahnungsachse mit der Drehachse C₁ zusammenfällt. Weiter bezeichnet C₂ die Drehachse eines als Feinbearbeitungswerkzeug dienenden verzahnten Honwerkzeugs, das derart drehbar gelagert ist, daß seine Verzahnungsachse mit der Drehachse C₂ zusammenfällt. Im folgenden werden daher diese beiden Verzahnungsachsen ebenfalls mit den Bezugssymbolen C, bzw. C₂ bezeichnet.

Durch eine Verschwenkung um die Schwenkachse A ist der Achskreuzungswinkel zwischen den Drehachsen oder Verzahnungsachsen C₁ und C₂ einstellbar. Außerdem ist ihr gegenseitiger Achsabstand durch eine in Achsabstandsrichtung verlaufende Linearachse X einstellbar. In der dazu transversalen Ebene ist die Relativposition der beiden Drehachsen oder Verzahnungsachsen C₁ und C₂ durch eine quer zur Linearachse X und zur Drehachse C₁ verlaufende Linearachse Y und eine parallel zur Drehachse C₁ verlaufende Linearachse Z einstellbar.

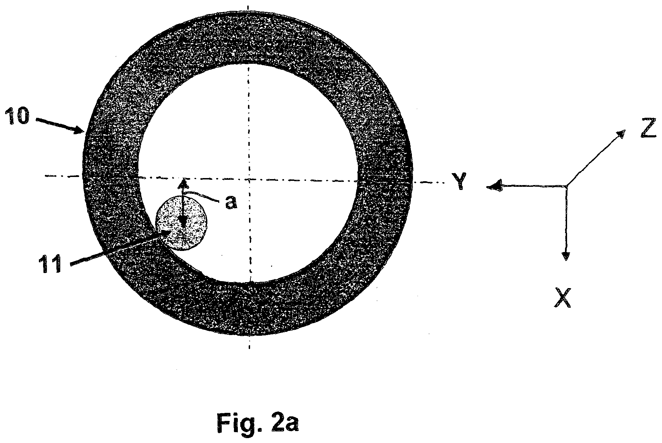

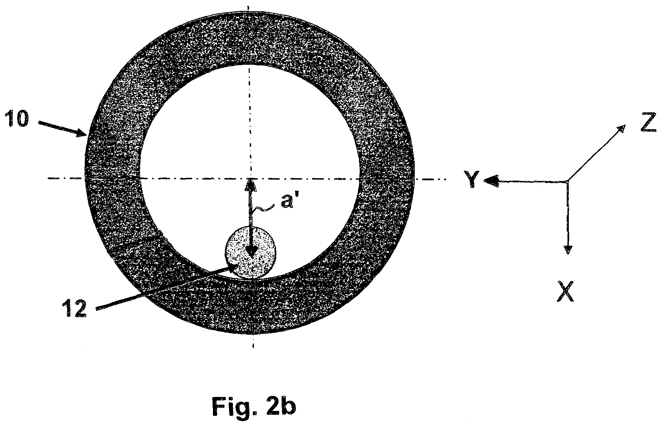

In diesem Achsensystem erstreckt sich die Zeichnungsebene der Fig. 2a und 2b parallel zur X-Y-Ebene und die Betrachtungsrichtung parallel zur Z-Achse. Da die Radialebene des das kreisringförmige Feinbearbeitungswerkzeug 10 bildenden Honrings um den Achskreuzungswinkel gegenüber der zur Radialebene der Drehachse C₁ parallelen X-Y-Ebene verschwenkt ist, müßte in den Darstellungen der Fig. 2a und 2b das Feinbearbeitungswerkzeug 10 nicht kreisförmig, sondern als Projektionsellipse dieser Kreisform erscheinen. Dies ist jedoch in diesen Darstellungen wegen ihrer rein schematischen Natur und dem normalerweise kleinen Wert des Achskreuzungswinkels aus Gründen der Darstellungsvereinfachung nicht berücksichtigt.

In den Fig. 2a und 2b verlaufen die Drehachsen C₁ und C₂ parallel zur Y-Z-Ebene. Daher erstreckt sich der Achsabstand a zwischen der Verzahnungsachse C₁ eines auf der Werkstückspindel aufgespannten, verzahnten Abrichtwerkzeugs 11 und der Verzahnungsachse C₂ des Feinbearbeitungswerkzeugs 10 gemäß Fig. 2a parallel zur X-Achse. Ebenso erstreckt sich gemäß Fig. 2b der Achsabstand zwischen der Verzahnungsachse C₁ eines auf die Werkstückspindel aufgespannten Werkstücks 12 und der Verzahnungsachse C₂ des Feinbearbeitungswerkzeugs 10 parallel zur X-Achse.

Die Fig. 2a und 2b verdeutlichen, daß der Achsabstand von der Relativposition der Verzahnungsachsen C₁, C₂ abhängt, in der die Verzahnungen des Feinbearbeitungswerkzeuges 10 und des Abrichtwerkzeuges 11 bzw. des Werkstücks 12 in Bearbeitungseingriff miteinander kämmen. In dem dargestellten Beispiel erstreckt sich die Verzahnungsachse C₂ des Feinbearbeitungswerkzeugs 10 in der Y-Z-Ebene und die Verzahnungsachse C₁ des Abrichtwerkzeugs 11 bzw. des Werkstücks 12 parallel zur Z-Achse. Fig. 2b zeigt die Position maximalen Achsabstandes a'. In diesem Fall liegt der Achsabstand auf einem zur Y-Z-Ebene orthogonalen Radiusvektor des Feinbearbeitungswerkzeugs 10.

Beim Abrichtvorgang werden die Verzahnungsachsen C₂ bzw. C₁ des Feinbearbeitungswerkzeugs 10 und des Abrichtwerkzeugs 11 relativ zueinander in einer gegenüber der Position maximalen Achsabstandes a' versetzten Position verringerten Achsabstandes a angeordnet. Dies ist in Fig. 2a veranschaulicht. In dem dieser Figur zugrundeliegenden Achsensystem ist die Verzahnungsachse C₁ des Feinbearbeitungswerkzeugs gegenüber der in Fig. 2b dargestellten Position maximalen Achsabstandes a' in der X-Y-Ebene versetzt. Vorzugsweise führt das Abrichtwerkzeug 11 eine Hubbewegung in der Richtung seiner Verzahnungsachse C₁ aus. Außerdem können der Verzahnungsachse C₁ parallel zur X-Y-Ebene gerichtete Bewegungskomponenten in bekannter Weise derart überlagert werden, daß ein Linienkontakt mit dem Feinbearbeitungswerkzeug 10 erhalten bleibt und/oder gewünschte Balligkeiten erzeugt werden.

Im Unterschied zu dem in Fig. 2a veranschaulichten Abrichtvorgang erfolgt die Bearbeitung der Werkstücke 12 mit dem abgerichteten Feinbearbeitungswerkzeug 10 in der in Fig. 2b veranschaulichten Position maximalen Achsabstandes a' zwischen der Verzahnungsachse C₂ des Feinbearbeitungswerkzeuges 10 und der Verzahnungsachse C₁ des Werkstücks 12.

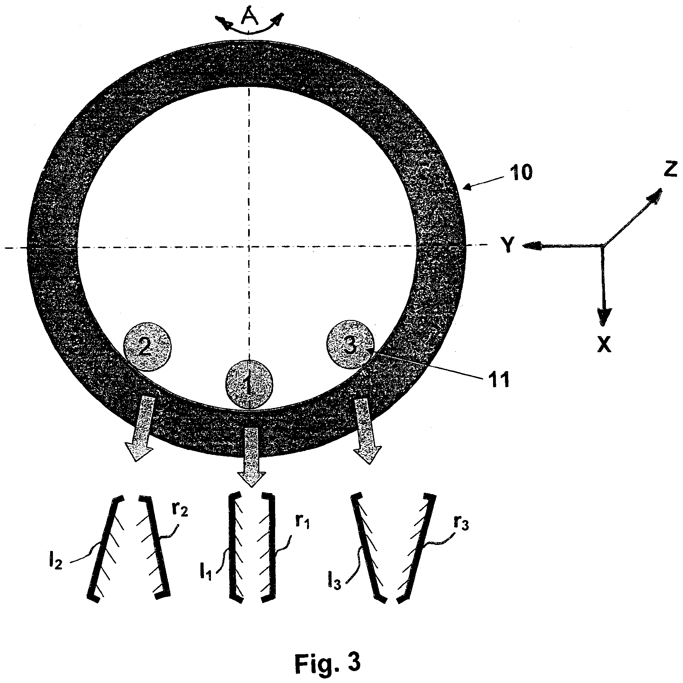

Fig. 3 stellt eine der Fig. 2a entsprechende Ansicht des Abrichtvorgangs dar. In dieser Ansicht ist jedoch das Abrichtwerkzeug 11 in drei mit den Ziffern "1", "2" und "3" bezeichneten unterschiedlichen Positionen eingezeichnet. Darunter sind die in diesen Positionen erzeugten Flankenlinienverläufe l₁, r₁; l₂, r₂; und l₃, r₃ des abgerichteten Feinbearbeitungswerkzeugs 10 veranschaulicht. Wie in den Fig. 2a und 2b verläuft in Fig. 3 die Verzahnungsachse C₁ des Abrichtwerkzeugs 11 parallel zur Z-Achse. Hiergegen ist die Verzahnungsachse C₂ des Feinbearbeitungswerkzeugs 10 in der Y-Z-Ebene um den Achskreuzungswinkel im Uhrzeigersinn geneigt.

Wenn das zylindrisch verzahnte Abrichtwerkzeug 11 in der Position 1 maximalen Achsabstandes angeordnet wird, weist die Verzahnung des abgerichteten Feinbearbeitungswerkzeugs 10 eine konstante Profilverschiebung ohne Berücksichtigung von Flankenlinienballigkeiten, deren Wert auch Null sein kann, über die Zahnbreite auf. Die linken und rechten Flankenlinien l₁, r₁ dieser Verzahnung verlaufen, wie in Fig. 3 dargestellt, zueinander parallel. Dagegen führt die Anordnung des Abrichtwerkzeuges 11 in den gegenüber der Position maximalen Achsabstandes 1 versetzten Positionen verringerten Achsabstandes 2 und 3 zu konisch modifizierten Zahnflankenverläufen I₂, r₂ und I₃, r₃. Dabei sind die Modifikationen der linken und rechten Flanken bei nicht zusätzlich nachgeführtem Achskreuzungswinkel zueinander symmetrisch. Wegen des in dem Achsensystem von Fig. 3 positiven Werts des Achskreuzungswinkels ist in der Position 2 die Eindringtiefe des Abrichtwerkzeugs 11 an der zum Betrachter weisenden Stirnseite des Feinbearbeitungswerkzeugs 10 geringer als an der dem Betrachter abgewandten Stirnseite. Daher verringert sich die Zahndicke in der Richtung der Achse des Feinbearbeitungswerkzeugs 10, wie es in Fig. 3 durch die Flankenlinien I₂, r₂ veranschaulicht ist. Dagegen ist in der Position 3 die Eindringtiefe an der zum Betrachter weisenden Stirnseite des Feinbearbeitungswerkzeugs größer. Deshalb nimmt die Zahndicke in der Richtung der Achse des Feinbearbeitungswerkzeugs 10 zu, wie es durch den Flankenlinienverlauf l₃, r₃ veranschaulicht ist.

### Verzeichnis der Bezugszeichen

- C₁: Drehachse Werkstückspindel
- C₂: Drehachse Honwerkzeug
- A: Schwenkachse
- X: Linearachse in Achsabstandsrichtung
- Y: Linearachse
- Z: Linearachse
- 10: Feinbearbeitungswerkzeug
- 11: Abrichtwerkzeug
- a: Achsabstand Abrichtwerkzeug
- a': Achsabstand Werkstück
- 12: Werkstück
- l₁, l₂, l₃, r₁, r₂, r₃: Flankenlinienverläufe

## Patentansprüche

1. Verfahren zum Feinbearbeiten eines verzahnten Werkstücks (12) mit einem damit in gegenseitigem Zahneingriff kämmenden verzahnten Feinbearbeitungswerkzeug (10), das einem Abrichtvorgang unterzogen wird, bei dem das Feinbearbeitungswerkzeug (10) und ein verzahntes Abrichtwerkzeug (11) in gegenseitigem Zahneingriff um ihre unter einem von Null verschiedenen Achsabstand (a) und einem von Null verschiedenen Achskreuzungswinkel angeordneten Verzahnungsachsen (C₂, C₁) rotieren, **dadurch gekennzeichnet, daß** die Verzahnungsachsen (C₂, C₁) des Feinbearbeitungswerkzeugs (10) und des Abrichtwerkzeugs (11) relativ zueinander in einer gegenüber einer Position maximalen Achsabstandes (a') versetzten Position verringerten Achsabstandes (a) angeordnet werden.

2. Verfahren nach Anspruch 1, **dadurch gekennzeichnet, daß** die Verzahnung des Feinbearbeitungswerkzeuges (10) eine Innenverzahnung und die Verzahnung des Abrichtwerkzeuges (11) eine Außenverzahnung ist.

3. Verfahren nach Anspruch 1, **dadurch gekennzeichnet, daß** die Verzahnung des Feinbearbeitungswerkzeugs (10) eine Außenverzahnung und die Verzahnung des Abrichtwerkzeugs (11) eine Innenverzahnung ist.

4. Verfahren nach einem der Ansprüche 1 bis 3, **dadurch gekennzeichnet, daß** das Feinbearbeitungswerkzeug (10) ein ringförmiges Honwerkzeug ist.

5. Verfahren nach einem der Ansprüche 1 bis 4, **dadurch gekennzeichnet, daß** die Zahndicke der Verzahnung des Abrichtwerkzeuges (11) ohne Berücksichtigung von Flankenlinienballigkeiten über die Zahnbreite konstant ist.

6. Verfahren nach einem der Ansprüche 1 bis 5, **dadurch gekennzeichnet, daß** der Relativbewegung zwischen dem Feinbearbeitungswerkzeug (10) und dem damit kämmenden Abrichtwerkzeug (11) eine zu dessen Verzahnungsachse (C₁) parallele Bewegungskomponente überlagert wird.

7. Verfahren nach einem der Ansprüche 1 bis 6, **dadurch gekennzeichnet, daß** der Relativbewegung zwischen dem Feinbearbeitungswerkzeug (10) und dem damit kämmenden Abrichtwerkzeug (11) eine zu dessen Verzahnungsachse (C₁) orthogonale Bewegungskomponente überlagert wird.

8. Verfahren nach einem der Ansprüche 1 bis 7, **dadurch gekennzeichnet, daß** das Werkstück (12) mit dem abgerichteten Feinbearbeitungswerkzeug (10) in einer Relativposition ihrer Verzahnungsachsen (C₁, C₂) bearbeitet wird, in der ihr Achsabstand (a') von dem Achsabstand (a) zwischen der Verzahnungsachse des Abrichtwerkzeugs (11) und der Verzahnungsachse des Feinbearbeitungswerkzeugs (10) beim Abrichten verschieden ist.

9. Verfahren nach Anspruch 8, **dadurch gekennzeichnet, daß** das Werkstück (12) mit dem abgerichteten Feinbearbeitungswerkzeug (10) im wesentlichen in einer Position maximalen Achsabstandes (a') zwischen der Verzahnungsachse (C₂) des Feinbearbeitungswerkzeuges (10) und der Verzahnungsachse (C₁) des Werkstücks (12) bearbeitet wird.

10. Verfahren nach Anspruch 8 oder 9, **dadurch gekennzeichnet, daß** bei der Bearbeitung des Werkstücks (12) der Achskreuzungswinkel zwischen den Verzahnungsachsen (C₁, C₂) des Werkstücks (12) und des Feinbearbeitungswerkzeugs (10) auf einen dem Achskreuzungswinkel zwischen den Verzahnungsachsen (C₁, C₂) des Abrichtwerkzeugs (11) und des Feinbearbeitungswerkzeugs (10) beim Abrichtvorgang entsprechenden Wert eingestellt wird.

11. Verfahren nach Anspruch 8 oder 9, **dadurch gekennzeichnet, daß** bei der Bearbeitung des Werkstücks (12) der Achskreuzungswinkel zwischen den Verzahnungsachsen (C₁, C₂) des Werkstücks (12) und des Feinbearbeitungswerkzeugs (10) auf einen gegenüber dem Achskreuzungswinkel zwischen den Verzahnungsachsen (C₁, C₂) des Abrichtwerkzeugs (11) und des Feinbearbeitungswerkzeugs (10) beim Abrichtvorgang versetzten Wert eingestellt wird.

12. Verfahren nach einem der Ansprüche 8 bis 11, **dadurch gekennzeichnet, daß** der Relativbewegung zwischen dem Feinbearbeitungswerkzeug (10) und dem damit kämmend in Bearbeitungseingriff stehenden Werkstück (12) eine Bewegungskomponente in Richtung der Verzahnungsachsen (C₁, C₂) überlagert wird.

13. Vorrichtung zum Feinbearbeiten eines verzahnten Werkstücks (12), mit einem um seine Verzahnungsachse (C₂) drehbaren verzahnten Feinbearbeitungswerkzeug (10), einem um seine Verzahnungsachse (C₁) drehbaren verzahnten Abrichtwerkzeug (11), einer zur Einstellung der Relativposition der beiden Verzahnungsachsen (C₁, C₂) dienenden Einrichtung und einer zur Steuerung der Einstelleinrichtung dienenden Steuereinrichtung, **dadurch gekennzeichnet, daß** die Steuereinrichtung die Vorrichtung derart steuert, dass ein Verfahren nach einem der Ansprüche 1 bis 12 ausgeführt wird.

14. Vorrichtung nach Anspruch 13, **dadurch gekennzeichnet, daß** die Steuereinrichtung programmgesteuert ist.

15. Steuerungsprogramm mit Programmcode zur Programmierung der programmgesteuerten Steuereinrichtung gemäß Anspruch 14 für die Durchführung des Verfahrens nach einem der Ansprüche 1 bis 12.

## Claims

1. Method for fine-machining of a toothed workpiece (12), using a toothed finishing tool (10) which meshes with the workpiece in mutual tooth engagement, wherein the finishing tool is subjected to a dressing process in which the finishing tool (10) and a toothed dressing tool (11), in tooth engagement with each other, rotate around their respective gear axes (C₂, C₁), which are arranged at a centre distance (a) different from zero and an axis-crossing angle different from zero, **characterised in that** the gear axes (C₂, C₁) of the finishing tool (10) and dressing tool (11) are arranged relative to each other in a position of a smaller centre distance (a) in comparison with a maximum centre distance (a').

2. Method according to claim 1, **characterised in that** the toothing of the finishing tool (10) is an internal toothing, while the toothing of the dressing tool (11) is an external toothing.

3. Method according to claim 1, **characterised in that** the toothing of the finishing tool (10) is an external toothing, while the toothing of the dressing tool (11) is an internal toothing.

4. Method according to one of claims 1 to 3, **characterised in that** the finishing tool (10) is a ring-shaped honing tool.

5. Method according to one of claims 1 to 4, **characterised in that** the tooth thickness of the dressing tool (11), disregarding tooth trace convexities, is constant over the tooth width.

6. Method according to one of claims 1 to 5, **characterised in that** a superimposed movement component parallel to the gear axis (C₁) of the dressing tool (11) is added to the relative movement between the finishing tool (10) and the dressing tool engaged with the latter.

7. Method according to one of claims 1 to 6, **characterised in that** a superimposed movement component perpendicular to the gear axis (C₁) of the dressing tool (11) is added to the relative movement between the finishing tool (10) and the dressing tool engaged with the latter.

8. Method according to one of the claims 1 to 7, **characterised in that** the workpiece (12) is machined with the dressed finishing tool (10) in a relative position of their gear axes (C₁, C₂) in which their centre distance (a') is different from the centre distance (a) at which the gear axis of the dressing tool (11) and the gear axis of the finishing tool (10) were positioned in the dressing process.

9. Method according to claim 8, **characterised in that** the workpiece (12) is machined with the dressed finishing tool (10) largely in a position of maximum centre distance (a') between the gear axis (C₂) of the finishing tool (10) and the gear axis (C₁) of the workpiece (12).

10. Method according to claims 8 or 9, **characterised in that**, for the machining of the workpiece (12), the axis-crossing angle between the gear axes (C₁, C₂) of the workpiece (12) and finishing tool (10) is set to a value which corresponds to the axis-crossing angle at which the gear axes (C₁, C₂) of the dressing tool (11) and finishing tool (10) were positioned in the dressing process.

11. Method according to claims 8 or 9, **characterised in that**, for the machining of the workpiece (12), the axis-crossing angle between the gear axes (C₁, C₂) of the workpiece (12) and finishing tool (10) is set to a value which is different to the axis-crossing angle at which the gear axes (C₁, C₂) of the dressing tool (11) and finishing tool (10) were positioned in the dressing process.

12. Method according to one of claims 8 to 11, **characterised in that** a movement component in the direction of the gear axes (C₁, C₂) is superimposed on the relative movement between the finishing tool (10) and the workpiece (12), which are in meshing engagement with each other in the machining process.

13. Device for fine-machining of a toothed workpiece (12), comprising a toothed finishing tool (10) that is rotatable around its gear axis (C₂), a toothed dressing tool (11) that is rotatable around its gear axis (C₁), a device to set the relative position between the two gear axes (C₁, C₂), and a controller device used to control the position-setting device, **characterised in that** the controller device controls the device for fine-machining such that a method according to one of the claims 1 to 12 is performed.

14. Device according to claim 13, **characterised in that** the controller device is program-controlled.

15. Control program with program code for programming the program-controlled controller device in accordance with claim 14 to run the method according to one of the claims 1 to 12.

## Revendications

1. Procédé pour l'usinage de finition d'une pièce dentée (12) au moyen d'un outil d'usinage de finition (10) denté venant mutuellement en prise avec celle-ci et étant soumis à un processus de dressage selon lequel l'outil d'usinage de finition (10) et un outil de dressage (11) denté tournent, en étant mutuellement en prise, autour de leurs axes de denture (C₂, C₁) disposés selon un entraxe (a) différent de zéro et un angle d'intersection des axes différent de zéro, **caractérisé en ce que** les axes de denture (C₂, C₁) de l'outil d'usinage de finition (10) et de l'outil de dressage (11) sont disposés l'un par rapport à l'autre dans une position de moindre entraxe (a) comparativement à une position d'entraxe maximal (a').

2. Procédé selon la revendication 1, **caractérisé en ce que** la denture de l'outil d'usinage de finition (10) est une denture intérieure et la denture de l'outil de dressage (11) est une denture extérieure.

3. Procédé selon la revendication 1, **caractérisé en ce que** la denture de l'outil d'usinage de finition (10) est une denture extérieure et la denture de l'outil de dressage (11) est une denture intérieure.

4. Procédé selon l'une des revendications 1 à 3, **caractérisé en ce que** l'outil d'usinage de finition (10) est un outil de rodage annulaire.

5. Procédé selon l'une des revendications 1 à 4, **caractérisé en ce que** l'épaisseur de dent de la denture de l'outil de dressage (11) est constante sur la largeur de la dent, sans tenir compte des bombés de ligne de flanc.

6. Procédé selon l'une des revendications 1 à 5, **caractérisé en ce qu'**une composante de déplacement parallèle à l'axe de denture (C₁) de l'outil de dressage (11) vient se superposer au déplacement relatif entre l'outil d'usinage de finition (10) et l'outil de dressage engrené avec celui-ci.

7. Procédé selon l'une des revendications 1 à 6, **caractérisé en ce qu'**une composante de déplacement orthogonale à l'axe de denture (C₁) de l'outil de dressage (11) vient se superposer au déplacement relatif entre l'outil d'usinage de finition (10) et l'outil de dressage engrené avec celui-ci.

8. Procédé selon l'une des revendications 1 à 7, **caractérisé en ce que** la pièce (12) est usinée, au moyen de l'outil d'usinage de finition (10) dressé, dans une position relative de leurs axes de denture (C₁, C₂) dans laquelle leur entraxe (a') est différent de l'entraxe (a) existant entre l'axe de denture de l'outil de dressage (11) et l'axe de denture de l'outil d'usinage de finition (10) lors du dressage.

9. Procédé selon la revendication 8, **caractérisé en ce que** la pièce (12) est usinée, au moyen de l'outil d'usinage de finition (10) dressé, sensiblement dans une position d'entraxe maximal (a') entre l'axe de denture (C₂) de l'outil d'usinage de finition (10) et l'axe de denture (C₁) de la pièce (12).

10. Procédé selon la revendication 8 ou 9, **caractérisé en ce que**, pour l'usinage de la pièce (12), l'angle d'intersection entre les axes de denture (C₁, C₂) de la pièce (12) et de l'outil d'usinage de finition (10) est réglé à une valeur correspondant à l'angle d'intersection existant entre les axes de denture (C₁, C₂) de l'outil de dressage (11) et de l'outil d'usinage de finition (10) au cours du processus de dressage.

11. Procédé selon la revendication 8 ou 9, **caractérisé en ce que**, pour l'usinage de la pièce (12), l'angle d'intersection entre les axes de denture (C₁, C₂) de la pièce (12) et de l'outil d'usinage de finition (10) est réglé à une valeur différente de l'angle d'intersection existant entre les axes de denture (C₁, C₂) de l'outil de dressage (11) et de l'outil d'usinage de finition (10) au cours du processus de dressage.

12. Procédé selon l'une des revendications 8 à 11, **caractérisé en ce qu'**une composante de déplacement dirigée vers les axes de denture (C₁, C₂) vient se superposer au déplacement relatif entre l'outil d'usinage de finition (10) et la pièce (12) engrenée avec ce dernier aux fins de son usinage.

13. Dispositif pour l'usinage de finition d'une pièce dentée (12), comportant un outil d'usinage de finition (10) denté susceptible de tourner autour de son axe de denture (C₂), un outil de dressage (11) denté susceptible de tourner autour de son axe de denture (C₁), un dispositif de réglage de la position relative entre les deux axes de denture (C₁, C₂), et un dispositif de commande servant à commander le dispositif de réglage, **caractérisé en ce que** le dispositif de commande effectue la commande du dispositif d'usinage de manière à mettre en oeuvre un procédé selon l'une des revendications 1 à 12.

14. Dispositif selon la revendication 13, **caractérisé en ce que** le dispositif de commande est commandé par un programme.

15. Programme de commande comportant un code de programme destiné à la programmation du dispositif de commande commandé par programme selon la revendication 14 aux fins de la réalisation du procédé selon l'une des revendications 1 à 12.
